Europäisches Patentamt

European Patent Office

Office européen des brevets

(19)

(11) Numéro de publication: **0 374 331**
A1

## (12) DEMANDE DE BREVET EUROPEEN

(21) Numéro de dépôt: 88403239.2

(22) Date de dépôt: 19.12.88

(51) Int. Cl.⁵: **B67D 5/32, B67D 5/22, B67D 5/08, B67D 5/30, G01F 15/075, G07D 1/00**

(43) Date de publication de la demande:
27.06.90 Bulletin 90/26

(84) Etats contractants désignés:
AT BE CH DE ES FR GB GR IT LI LU NL SE

(71) Demandeur: EQUIPEMENT INDUSTRIEL NORMAND
B.P. 176
F-14013 Caen Cedex(FR)

(72) Inventeur: Coquerel, Michel
Villa "Le Havenet"
F-14113 Villerville(FR)

(74) Mandataire: Madeuf, René Louis et al
Cabinet Madeuf Conseils en Propriété
Industrielle 3, Avenue Bugeaud
F-75116 Paris(FR)

(54) **Dispositif de sécurité pour un organe distributeur relié à un élément totalisateur de produit distribué.**

(57) Dispositif assurant une sécurité automatique de la transmission entre l'élément de mesurage (2) d'un organe distributeur (1) et un élément totalisateur (4) du produit distribué, caractérisé en ce que l'élément de mesurage (2) ainsi que l'élément totalisateur (4) sont chacun relié à un détecteur de fonctionnement (5 et, respectivement, 6) fournissant chacun respectivement une information aux deux entrées (7a, 7b) d'un circuit de gestion (7) à fonction ET, ce circuit de gestion étant relié en sortie à l'organe distributeur (1) afin de l'arrêter si l'une ou l'autre des informations ci-dessus de détection ne lui parvient pas.

FIG.2

## Dispositif de sécurité pour un organe distributeur relié à un élément totalisateur de produit distribué.

La présente invention se rapporte de manière générale à un dispositif assurant une sécurité automatique de la transmission entre l'élément de mesurage d'un organe distributeur et un élément totalisateur du produit distribué.

Dans tous les distributeurs de produits, l'élément de mesurage de l'organe distributeur est relié à l'élément totalisateur du produit distribué par l'intermédiaire d'une transmission de type mécanique ou autre.

Dans le cas par exemple d'une transmission à chaîne cinématique de pignonnerie présentant au moins un renvoi d'angle et une liaison souple, il peut alors se produire une interruption de la chaîne de transmission par coupure d'un élément quelconque de la chaîne, telle qu'une rupture d'une goupille ou d'une clavette, ou tel qu'un débrayage de la pignonnerie. L'organe distributeur peut alors continuer à distribuer le produit sans que l'élément totalisateur soit actionné et donc sans que le produit distributeur soit comptabilisé. De même il peut se produire des cas où l'élément totalisateur continuerait de tourner sans qu'un produit soit distribué.

Une application non exhaustive du dispositif de sécurité conforme à l'invention concerne les distributeurs de carburant dans lesquels le décrochage du pistolet a pour effet d'enclencher la mise en fonctionnement de la pompe d'un organe distributeur. Cette pompe refoule alors, par l'intermédiaire d'un élément de mesurage et d'un tuyau flexible, le carburant vers le pistolet et, de là, par exemple dans le réservoir d'une automobile. Une transmission mécanique du type ci-dessus relie l'élément de mesurage à un élément totalisateur, l'affichage dynamique de la quantité de produit distribué étant assuré à partir de l'élément totalisateur éventuellement relié à un calculateur par l'intermédiaire d'un émetteur d'impulsions.

Au cas où la transmission entre l'élément de mesurage et l'élément totalisateur d'un tel distributeur de carburant est rompue, un débit de carburant peut avoir lieu alors que l'affichage donné par l'élément totalisateur reste inerte. Il en résulte alors un débit non comptabilisé et, par voie de conséquence, des fraudes possibles, des pertes de carburant, une pollution éventuelle, ainsi que des dérives de gestion des stocks (entrées et sorties du carburant) par exemple.

Le dispositif conforme à l'invention est évidemment applicable à tout type d'organes distributeurs et, par exemple, également à un distributeur de billets de banque dans lequel le nombre de billets distribués pourrait ne pas être totalisé en absence du dispositif de sécurité conforme à la présente invention.

La présente invention élimine ainsi les inconvénients exposés ci-dessus en créant un dispositif assurant une sécurité automatique entre l'élément de mesurage d'un organe distributeur et un élément de mesurage du produit distribué.

Conformément à l'invention, le dispositif de sécurité est caractérisé en ce que l'élément de mesurage ainsi que l'élément totalisateur sont chacun reliés à un détecteur de fonctionnement fournissant chacun respectivement une information aux deux entrées d'un circuit de gestion à fonction ET, ce circuit de gestion étant relié en sortie à l'organe distributeur afin de l'arrêter si l'une ou l'autre des informations ci-dessus de détection ne lui parvient pas.

Il est fréquent que l'élément totalisateur soit lui-même relié à un émetteur d'impulsions entraînant un compteur électronique de manière à assurer un affichage de type numérique de la quantité (ou de la valeur) du produit distribué. Dans ce cas, le dispositif conforme à l'invention assure une sécurité automatique entre une transmission du type ci-dessus et l'émetteur d'impulsions.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est un schéma synoptique illustrant le principe du dispositif selon la présente invention.

La fig. 2 représente un exemple de réalisation du dispositif de la figure 1.

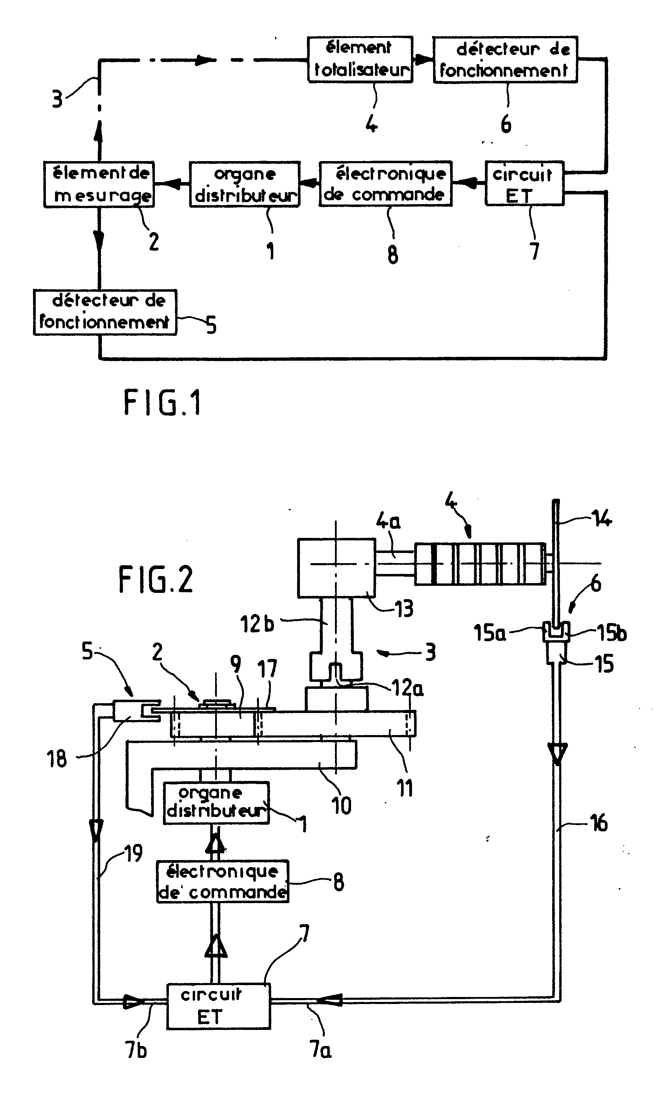

A la fig. 1, on a représenté sous forme de blocs un organe distributeur 1 de produits divers relié à un élément de mesurage 2. Une liaison de transmission 3, de type mécanique ou autres, relie l'élément de mesurage 2 à un élément totalisateur 4. Ainsi, lorsqu'un produit est distribué par l'organe distributeur 1 (qui peut par exemple être une pompe distribuant un produit pétrolier ou une station à cartes bancaires distribuant des billets de banque), la mesure de produit distribué est effectuée par l'élément de mesurage 2 et transmise par la liaison 3 vers l'élément totalisateur 4 où elle est comptabilisée.

Si, toutefois, la liaison de transmission 3 s'interrompt pour une raison quelconque et, par exemple lorsque la liaison de transmission est une chaîne cinématique de pignonnage à renvoi d'angle et liaison souple, si une goupille ou une clavette vient à se rompre, ou s'il se produit un débrayage du pignonnage (qu'une telle interruption soit d'ailleurs intentionnelle ou non), l'élément de mesurage ne transmet alors plus d'informations à l'élément totalisateur. Du produit peut ainsi continuer d'être distribué par l'organe distributeur 1 sans être comptabilisé par l'élément totalisateur 4 qui n'est alors plus entraîné par la liaison de transmission 3.

De manière à éviter ce qui précède, et conformément à l'invention, on monte, tant sur l'élément de mesurage 3 que sur l'élément totalisateur 4, un détecteur de fonctionnement 5 et, respectivement, 6.

Les détecteurs 5 et 6 sont chacun reliés en sortie à un circuit de gestion 7 à fonction ET qui est lui-même relié à l'organe distributeur 1 par l'intermédiaire d'un circuit électronique de commande 8.

Ainsi, si les détecteurs 5 et 6 n'ont pas tous les deux reçu une information de détection du bon fonctionnement de l'élément 3 ou 4 sur lequel ils sont montés, alors le circuit de gestion 7 à fonction ET n'émet aucun signal au circuit électronique de commande 8 de sorte que l'organe distributeur 1 n'est par exemple plus alimenté et arrête la distribution du produit, le circuit de gestion 7 ayant ainsi détecté une anomalie quelconque sur la liaison de transmission 3.

Au contraire, si les détecteurs 5 et 6 détectent que l'élément totalisateur 4 fonctionne en même temps que l'élément de mesurage 2, alors le circuit de gestion 7 émet un signal au circuit électronique de commande 8 qui fait fonctionner l'organe distributeur 1, de sorte que ce dernier distribue du produit. A ce sujet, le circuit électronique de commande 8 peut comprendre un circuit de prépaiement donnant à l'organe distributeur 1 l'ordre de distribuer une certaine quantité de produit, à la suite par exemple d'un paiement effectué au préalable.

A la fig. 2 qui représente une forme de réalisation du dispositif de la fig. 1, les éléments correspondant à ceux de la fig. 1 comportent les mêmes numéros de référence.

On retrouve ainsi à la fig. 2 et sous forme de blocs, l'organe distributeur 1 soumis au circuit de gestion 7 à fonction ET par l'intermédiaire de l'électronique de commande 8.

A la fig. 2, un pignon 9 de l'élément de mesurage 2 est monté sur un support 10 et est directement entrainé par l'organe distributeur 1. Le support 10 porte également une pignonnerie 11 prévue pour engrener avec le pignon 9 et faisant partie de la liaison 3 de la fig. 1 qui, dans le cas représenté, est une chaîne cinématique comprenant une liaison souple 12a avec un arbre 12b et un renvoi d'angle 13.

Le renvoi d'angle 13 de la liaison 3 est relié à l'élément totalisateur 4 qui est figuré sous la forme d'un ensemble de compteurs mécaniques dont l'axe commun 4a porte un disque 14 faisant partie du détecteur 6 de fonctionnement de l'élément totalisateur 4.

Dans la réalisation représentée, le disque 14 est constitué sous la forme d'une marguerite semblable à celles utilisées sur certaines machines à écrire et comporte un certain nombre de secteurs opaques qui, lors de la rotation du disque 14, viennent interrompre la lumière émise par un émetteur 15a vers un récepteur 15b d'une cellule photo électrique 15 en produisant ainsi des impulsions de courant.

Il est évident que l'on pourrait prévoir d'autres réalisations du détecteur 6 de telle manière que, lorsque l'élément totalisateur 4 fonctionne et par exemple tourne, ce détecteur émette en sortie un certain signal. On pourrait, par exemple, employer un système à effet Hall, ou un système électromécanique générant un certain courant à la sortie d'un organe semblable à la cellule photo-électrique 15 lorsque le disque 14 tourne, ou, en général, lorsque l'élément totalisateur 4 fonctionne, qu'il porte un disque ou non.

Un câble électrique 16 est relié entre la sortie de la cellule photo-électrique 15 du détecteur 6 et une entrée 7a du circuit de gestion 7 à fonction ET. Les informations ainsi transmises par le câble électrique 16 sont appelées "informations principales" et sont ici les impulsions de courant de sortie de la cellule photoélectrique 15.

De manière analogue, un disque 17 est monté sur le pignon 9 de l'élément de mesurage 2 et est entraîné en rotation lorsque l'organe distributeur 1 fonctionne.

Dans la réalisation représentée, le disque 17 est semblable au disque 14 du détecteur 6 et comprend également une marguerite. Toutefois, à la différence de la marguerite du disque 14, la marguerite du disque 17 comprend une succession de diodes électroluminescentes. Lorsque le disque 17 est entraîné en rotation, le passage de ces diodes devant un capteur 18 faisant partie du détecteur 5 génère, à la sortie de l'organe 18, des informations dites "de contrôle", sous la forme d'impulsions lumineuses. Un réseau à fibres optiques 19 transmet les informations de contrôle à une seconde entrée 7b du circuit de gestion 7 à fonction ET.

Bien que l'on ait représenté les informations de contrôle sous la forme d'une succession d'impulsions lumineuses et les informations principales sous la forme d'une succession d'impulsions électriques, il est évident que tant les informations de contrôle que les informations principales peuvent être soit de type lumineux soit de type électrique et, de même, soit de type impulsionnel soit de type continu, et, qu'en outre, les détecteurs de fonctionnement 5 et 6 peuvent être de tous types appropriés et être identiques ou non.

On voit à la fig. 2 que, si la chaîne cinématique de la liaison de transmission 3 est interrompue pour une raison quelconque, par exemple si une goupille ou une clavette que comprend cette chaîne cinématique vient à se rompre, ou s'il se produit un débrayage quelconque de la pignonnerie 11 par rapport au pignon 9, les informations principales ne sont pas émises vers l'entrée 7a du circuit de gestion 7.

Ainsi, si l'élément de mesurage 2 continue de mesurer une certaine quantité de produit fournie par l'organe distributeur 1, le détecteur 5 détectera cette distribution et enverra les informations de contrôle sur l'entrée 7b du circuit de gestion 7. Toutefois, le circuit de gestion 7 ne fournira aucun signal de sortie vers l'électronique de commande 8 car il ne reçoit pas les informations principales sur son entrée 7a. L'organe distributeur 1 n'est alors plus alimenté par l'intermédiaire du circuit électronique de commande 8 et ne distribue plus de produit. Il est également possible de prévoir que le circuit électronique de commande 8 actionne dans ce cas la fermeture d'une électrovanne arrêtant la distribution du produit par l'organe distributeur 1.

Il est évidemment possible de supprimer au moins en partie les compteurs mécaniques de l'élément totalisateur 4 et de relier cet élément totalisateur à un émetteur d'impulsions faisant partie du détecteur 6 et, dans ce cas, le circuit de gestion 7 à fonction ET peut incorporer un calculateur électronique de gestion des impulsions à affichage électronique.

Ainsi, dans le cas où l'élément totalisateur est relié à un organe électronique d'affichage, il n'y a pas lieu de former extérieurement les impulsions de l'information principale qui sont alors automatiquement produites. Le dispositif selon l'invention assure alors une sécurité automatique entre une transmission du type ci-dessus et l'émetteur d'impulsions commandant le calculateur électronique en donnant en sortie du circuit de gestion un signal correspondant au fonctionnement parallèle de l'élément de mesurage et de l'élément totalisateur.

Le dispositif de sécurité selon l'invention a été plus particulièrement développé en vue de son application aux distributeurs de carburants à calculateur et afficheur électronique dans lesquels le décrochage du pistolet a pour effet d'enclencher la mise en fonctionnement d'une pompe qui refoule le carburant vers un pistolet de remplissage du réservoir d'une automobile par l'intermédiaire d'un élément mesureur et d'un flexible, l'affichage dynamique étant alors assuré par le calculateur par l'intermédiaire d'un émetteur d'impulsions comme indiqué ci-dessus.

Dans une telle application, en effet, en l'absence d'un dispositif de sécurité entre la transmission mécanique et l'émetteur d'impulsions, le débit de carburant peut avoir lieu alors que l'affichage reste immobile et inerte, ce qui a pour conséquence un débit non comptabilisé et donc, des fraudes diverses, une perte de carburant, d'éventuelles pollutions, ainsi que des dérives de gestion des stocks (entrée et sortie du carburant) que le dispositif de sécurité, objet de la présente invention, vise à éliminer.

Toutefois, le dispositif selon l'invention n'est pas limité à cette application et peut trouver une utilisation notamment dans la distribution automatique de billets de banque à l'aide de cartes bancaires.

## Revendications

1 - Dispositif assurant une sécurité automatique de la transmission entre l'élément de mesurage (2) d'un organe distributeur (1) et un élément totalisateur (4) du produit distribué, caractérisé en ce que l'élément de mesurage (2) ainsi que l'élément totalisateur (4) sont chacun relié à un détecteur de fonctionnement (5 et, respectivement, 6) fournissant chacun respectivement une information aux deux entrées (7a, 7b) d'un circuit de gestion (7) à fonction ET, ce circuit de gestion étant relié en sortie à l'organe distributeur (1) afin de l'arrêter si l'une ou l'autre des informations ci-dessus de détection ne lui parvient pas.

2 - Dispositif selon la revendication 1, caractérisé en ce que l'élément totalisateur (4) est lui-même relié à un émetteur d'impulsions faisant partie du détecteur (6), le circuit de gestion (7) à fonction ET incorporant un calculateur électronique de gestion des impulsions, de sorte que le dispositif assure une sécurité automatique entre la transmission et l'émetteur d'impulsions.

3 - Dispositif selon l'une des revendications 1 ou 2, caractérisé en ce que l'élément totalisateur et/ou l'élément de mesurage comporte un disque (14, 17) et un élément de détection (15, 18) de la rotation du disque de manière à former ainsi ledit détecteur.

4 - Dispositif selon l'une des revendications 1 à 3, caractérisé en ce que la liaison de transmission (3) est de type mécanique et comprend une chaîne cinématique incorporant une pignonnerie (11) reliée à un pignon (9) de l'élément de mesurage (2), ainsi qu'une liaison souple (12a) et un renvoi d'angle (13).

5 - Dispositif selon l'une des revendications 1 à 4, caractérisé en ce que l'organe distributeur (1) est pris parmi une pompe de distribution de liquides tels que des carburants, un distributeur de billets de banque, et autres distributeurs analogues de produits divers.

6 - Dispositif selon l'une des revendications 1 à 5, caractérisé en ce que le circuit de gestion (7) actionne une électrovanne arrêtant la distribution du produit en cas de rupture de la transmission (3).

7 - Dispositif selon l'une des revendications 1 à 6, caractérisé en ce que les détecteurs de fonctionnement (5, 6) sont du type électrique et/ou lumineux.

8 - Dispositif selon l'une des revendications 1 à 7, caractérisé en ce qu'on incorpore entre le circuit de gestion (7) et l'organe distributeur (1) un circuit électronique de commande (8) comportant éventuellement un circuit de pré-paiement.

FIG.1

FIG.2

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 421 248 (PORCINA) <br> * En entier * <br> --- | 1,5 | B 67 D 5/32 <br> B 67 D 5/22 <br> B 67 D 5/08 <br> B 67 D 5/30 <br> G 01 F 15/075 <br> G 07 D 1/00 |
| A | GB-A-1 064 180 (WAYNE TANK AND PUMP CO. LTD) <br> * Page 1, lignes 59-67 * <br> ----- | 1,5 | |
| | | | **DOMAINES TECHNIQUES RECHERCHES (Int. Cl.5)** <br><br> B 67 D <br> G 01 F |

Le présent rapport a été établi pour toutes les revendications

| Lieu de la recherche | Date d'achèvement de la recherche | Examinateur |
|---|---|---|
| LA HAYE | 24-07-1989 | ROSE A.R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................

& : membre de la même famille, document correspondant

EPO FORM 1503 03.82 (P0402)